(19) Europäisches Patentamt
European Patent Office
Office européen des brevets

(11) **EP 2 985 898 A1**

(12) **EUROPÄISCHE PATENTANMELDUNG**

(43) Veröffentlichungstag:
**17.02.2016 Patentblatt 2016/07**

(51) Int Cl.:
*H02M 3/158* (2006.01)     *H02M 3/335* (2006.01)

(21) Anmeldenummer: **14180724.8**

(22) Anmeldetag: **12.08.2014**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Brusa Elektronik AG
9466 Sennwald (CH)**

(72) Erfinder:
• **Schiedermeier, Max
9466 Sennwald (CH)**
• **Friewald, Kai
6800 Feldkirch (AT)**

(74) Vertreter: **Patentbüro Paul Rosenich AG
BGZ
9497 Triesenberg (LI)**

(54) **Gleichspannungswandler mit zumindest zwei Betriebsmodi**

(57)     Die Erfindung betrifft einen Gleichspannungswandler (5) mit zumindest zwei Betriebsmodi, umfassend: eine erste (3) und zweite Verbindungleitung (4), die jeweils gleichnamige Pole des Gleichspannungswandlers (5) verbinden, eine Primärspule (15) und eine Sekundärspule (16), die induktiv miteinander gekoppelt sind, wobei eine erste Schalteinrichtung (10) zwischen der ersten (3) und zweiten Verbindungsleitung (4) geschaltet und mit der Primärspule (15) verbunden ist, wobei die Primärspule (15) in zumindest einem Schaltzustand der ersten Schalteinrichtung (10) parallel zum Gleichspannungseingang (1) geschaltet ist und in zumindest einem weiteren Schaltzustand der ersten Schalteinrichtung (10) von der ersten und/oder zweiten Verbindungsleitung (3; 4) getrennt ist, und wobei eine zweite Schalteinrichtung (20) in der zweiten Verbindungsleitung (4) geschaltet und mit der Sekundärspule (16) verbunden ist, wobei in zumindest einem Schaltzustand der zweiten Schalteinrichtung (20) die zweite Verbindungsleitung (4) unterbrochen und die Unterbrechung in der zweiten Verbindungsleitung (4) durch eine Umleitung über die Sekundärspule (16) umgangen ist, und wobei in zumindest einem weiteren Schaltzustand der zweiten Schalteinrichtung (20) unabhängig von der Sekundärspule (16) eine galvanische Verbindung zwischen dem ersten Pol des Gleichspannungseingangs (1) und dem gleichnamigen ersten Pol des Gleichspannungsausgangs (2) hergestellt ist.

Fig. 1

EP 2 985 898 A1

**Beschreibung**

Die Erfindung betrifft einen Gleichspannungswandler mit zumindest zwei Betriebsmodi gemäss dem Oberbegriff des Anspruch 1 sowie ein Verfahren zum Betrieb eines solchen Gleichspannungswandlers, einen elektrischen Energieversorgungsstrang und ein Elektrofahrzeug.

Es handelt sich dabei um einen DC/DC-Wandler zur Energieversorgung bzw. Bereitstellung/Aufbereitung von elektrischer Energie, insbesondere im Hochvolt-Bereich. In diesem Sinne handelt es sich um eine leistungsfähige Schaltung. In einem Normalmodus (erster Betriebsmodus) erfolgt dabei üblicherweise keine Spannungsverstärkung bzw. kann die Ausgansspannung aufgrund der minimen Spannungsabfälle innerhalb des Wandlers etwas geringer als die Eingangsspannung sein. In einem zweiten Betriebsmodus des DC/DC-Wandlers (auch Boost-Modus genannt) soll dabei eine Spannungsverstärkung erfolgen, die es erlaubt, für eine bestimmte Zeitspanne (z.B. einige Sekunden) eine erhöhte Leistung bereitzustellen. In diesem Betriebsmodus ist der Gleichspannungswandler ein Hochsetzsteller.

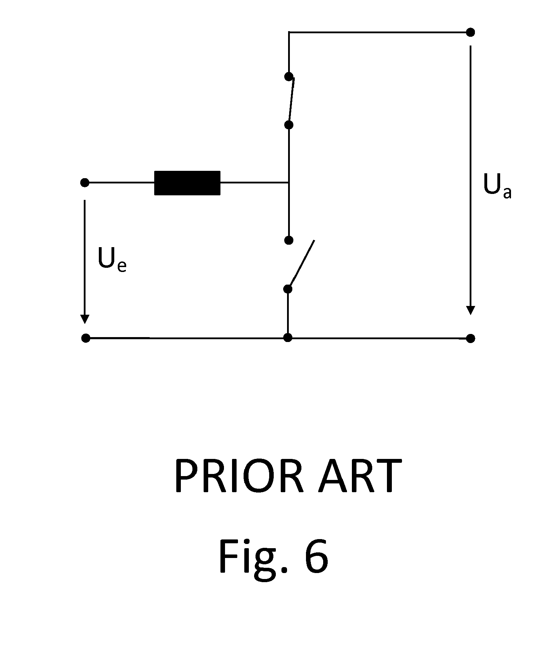

Im Stand der Technik können im wesentlichen zwei Typen von DC/DC-Wandlern voneinander unterschieden werden: Bei einem ersten Typ sind der Eingang und der Ausgang vollständig galvanisch voneinander getrennt. Die Energieübertragung erfolgt ausschliesslich induktiv über einen Transformator. Bei einem zweiten Typ, der in Fig. 6 dargestellt ist, kann in einem Normalmodus der (Gleich-)Strom vom Eingang ($U_e$) über eine Drossel und einen geschlossenen Schalter zum Ausgang ($U_a$) fliessen. Es handelt sich hier um einen konventionellen Halbbrückenwandler. Die Eingangsspannung entspricht im Normalmodus der Ausgangsspannung. Nachteilig ist nun, dass der gesamte Strom über die Drossel und den oberen Schalter fliesst. Halbleiterschalter verursachen jedoch insbesondere bei hohen Strömen hohe Verluste. Ausserdem muss die Halbbrücke und damit auch der dauerhaft belastete, obere Schalter auf die Ausgansspannung $D_a$ ausgelegt sein. Die entsprechend erforderliche Dimensionierung von Drossel und Schalter ist kostspielig und erfordert viel Raum. Darüber hinaus muss die Kühlung dieser Komponenten entsprechend ausgelegt sein. Im Boost-Modus werden die (in Fig. 6 dargestellten) Schalter intermittierend aktiviert, sodass die Eingangsspannung in einem entsprechendem Verhältnis zerhackt wird, um am Ende eine erhöhte Ausgangsspannung bereitzustellen.

Solche DC/DC-Wandler können z.B. in Elektroautos dazu eingesetzt werden, um beim Beschleunigen des Fahrzeuges (z.B. bei einem Überholvorgang) kurzzeitig ein erhöhtes Drehmoment zu erreichen. Dabei erfolgt ein 'Boosten' von der Batterieseite zur Traktionsseite. Diese Möglichkeit bzw. die dafür vorgesehene Betätigung wird auch als Kick-Down bezeichnet.

Die US7557546B2 offenbart einen unidirektionalen DC/DC-Wandler mit einem Konzept zum weichen Schalten. Dazu wird ein Snubber-Kreis, bestehend aus Diode, IGBT und Sekundärwicklung eines Trafos eingebracht.

Die US5060130A offenbart eine Leistungsversorgungsschaltung mit der Möglichkeit des Erhöhens der Eingangsspannung, sobald diese ein gewisses Minimum unterschreitet. Ist dies der Fall, beginnen die beiden Phasen des DC-Wandlers, versetzt zu takten. Dadurch entsteht über der Primärwicklung des Trafos, welcher sich zwischen den Brückenpunkten der Halbbrücken befindet, eine Spannung. Diese wird (via die Sekundärwicklung des Trafos) an den Eingang transferiert und dort gleichgereichtet.

Die US8461813B2 offenbart die Möglichkeit einer gleichzeitigen Bereitstellung von AC und DC für elektrische Accessoires. Als Beispiel ist die Umwandlung von photovoltaischer DC-Energie angegeben. Die Abzweigung für den AC-Anschluss aus einer DC-Leitung erfolgt mittels einer Vollbrücke, deren Brückenzweig eine Primärspule bildet (siehe Fig. 4 der US8461813B2). Die Primärspule dient dazu, um an eine Sekundärspule, die aber Bestandteil des elektrischen Accessoires ist, anzukoppeln.

Der US6191957 B1 offenbart einen Leistungskonverter, bei dem die Kopplung ausschliesslich induktiv (d.h. galvanisch getrennt) erfolgt.

Die US6587356B2 offenbart ebenfalls nur einen ausschliesslich induktiv gekoppelten Wandler (der u.a. eine Vollbrücke mit Primärspule aufweist), bei dem jedoch Ausgang und Eingang galvanisch getrennt sind.

Aufgabe der vorliegenden Erfindung ist es, einen DC/DC-Wandler bereitzustellen, bei dem in einem Normalmodus die Belastung von induktiven Bauelementen und Schaltern gering gehalten werden kann. Diese sollen in Folge für geringere Spannungen ausgelegt werden können. Dadurch sollen die Kosten reduziert und ein platzsparendes Design ermöglicht werden. Die Anforderungen an eine Kühlung der Komponenten sollen geringer werden, wodurch sich auch hier eine Kostenersparnis einstellt.

Diese Aufgabe wird dadurch gelöst, dass die erste Schalteinrichtung zwischen der ersten und zweiten Verbindungsleitung geschaltet und mit der Primärspule verbunden ist, wobei die Primärspule in zumindest einem Schaltzustand der ersten Schalteinrichtung parallel zum Gleichspannungseingang geschaltet ist und in zumindest einem weiteren Schaltzustand der ersten Schalteinrichtung (entspricht dem ersten Betriebsmodus, auch Normalmodus genannt) von der ersten und/oder zweiten Verbindungsleitung getrennt ist,

und dass die zweite Schalteinrichtung in der zweiten Verbindungsleitung geschaltet und mit der Sekundärspule verbunden ist, wobei in zumindest einem Schaltzustand der zweiten Schalteinrichtung die zweite Verbindungsleitung unterbrochen und die Unterbrechung in der zweiten Verbindungsleitung durch eine Umleitung über die Sekundärspule umgangen ist, und wobei in zumindest einem weiteren Schaltzustand der zweiten Schalteinrichtung (entspricht dem ersten Betriebsmodus, auch Normalmodus genannt) unabhängig von der Sekundärspule eine galvanische Verbindung zwischen dem ersten Pol des Gleichspannungseingangs und dem gleichnamigen ersten Pol des Gleichspannungsausgangs (durch die zweite Verbindungsleitung) hergestellt ist.

Die zweite Verbindungsleitung, die einen zweiten Pol des Gleichspannungseingangs mit einem gleichnamigen zweiten Pol des Gleichspannungsausgangs verbindet, kann somit durch die zweite Schalteinrichtung (elektrisch) unterbrochen werden. In dem ,zumindest einen weiteren Schaltzustand' der zweiten Schalteinrichtung vermittelt die zweite Verbindungsleitung eine galvanische Verbindung zwischen den gleichnamigen zweiten Polen von Eingang und Ausgang (und zwar unabhängig bzw. unter Umgehung der Sekundärspule).

Die erste Verbindungleitung vermittelt - unabhängig von den Schaltzuständen der ersten und zweiten Schalteinrichtung - eine galvanische Verbindung zwischen dem ersten Pol des Gleichspannungseingangs und dem gleichnamigen ersten Pol des Gleichspannungsausgangs.

Bei der erfindungsgemässen Lösung zeichnet sich ein erster Betriebsmodus (oder Normalmodus) dadurch aus, dass die Primärspule bzw. der aus Primärspule und Sekundärspule gebildete Transformator nicht von Strom durchflossen wird. Im Normalmodus werden dadurch nicht nur Verluste vermieden, sondern es erfolgt auch keine Wärmeentwicklung des aus Primärspule und Sekundärspule gebildeten Transformators. Die zweite Schalteinrichtung kann für wesentlich geringere Spannungen ausgelegt werden. Im Normalmodus sind Schalter der zweiten Schalteinrichtung geschlossen, d.h. hier fällt praktisch keine Spannung ab. Wenn die Schalter der zweiten Schalteinrichtung takten, dann ist die maximale Spannung, welche über den Schaltern (Halbleiterschalter) abfallen kann, die maximale Spannung, welche über der Sekundärspule abfallen kann. Dadurch werden auch die Verluste in der Schalteinrichtung verringert.

Im zweiten Betriebsmodus (oder Boost-Modus), in dem der Gleichspannungswandler als Verstärker arbeitet, werden die Schaltelemente der ersten Schalteinrichtung intermittierend bzw. periodisch geschaltet, um die Stromrichtung durch die Primärspule intermittierend zu ändern, und werden die Schaltelemente der zweiten Schalteinrichtung intermittierend bzw. periodisch geschaltet, um die Stromrichtung durch die Sekundärspule intermittierend zu ändern. Die Schalteinrichtungen sind dabei aufeinander synchronisiert, sodass am Ausgang eine Gleichspannung erzeugt wird. Wie bereits erwähnt umfasst jede Schalteinrichtung mehrere Schaltelemente, vorzugsweise Halbleiterschaltelemente.

Z.B. kann ein solcher DC/DC-Wandler zum Boosten von der Batterieseite zur Traktionsseite eines Elektrofahrzeuges eingesetzt werden.

Wie bereits erwähnt fliesst bei einem konventionellen Halbbrückenwandler Strom im Normalmodus permanent über die Drossel und den oberen Schalter (Fig. 6). Dieser Schalter muss von seiner Bemessungsspannung für die gesamte Ausgangsspannung ausgelegt sein. Bei der Erfindung ist dies nicht so. Strom fliesst im Normalmodus nicht über die Drossel, sondern wird über eine galvanische Verbindung zwischen Eingang und Ausgang geführt. Er fliesst zwar dauerhaft über Schaltelemente (Halbleiterschalter) der zweiten Schalteinrichtung, diese können aber für wesentlich geringere Spannungen ausgelegt werden und sind deshalb bei Weitem effizienter und kleiner.

Im Normalmodus gibt es somit quasi keine Verluste durch den DC/DC-Wandler bzw. beschränken sich diese im Wesentlichen auf geringfügige Verluste, welche durch die (Halbleiter-)Schalter der zweiten Schalteinrichtung verursacht werden. Die Ausgangsspannung kann dabei im Wesentlichen der Eingangsspannung entsprechen.

Der Boost-Modus ist dazu vorgesehen, um für eine kurze Zeitspanne, vorzugsweise weniger als 1 min, besonders bevorzugt weniger als 30s, betätigt zu werden.

Es handelt sich somit um eine Schaltung, bei der eine (zeitweilige) Spannungs- bzw. Leistungsverstärkung (Boost-Modus) durch einen induktiv vermittelten Bypass aus Primärspule und Sekundärspule zu einer ansonsten

(d.h. im Normalmodus) einfachen galvanischen Verbindung ohne induktive Bauelemente erfolgt.

Während im Normalmodus die Ausgangsspannung im Wesentlichen gleich der Eingangsspannung ist:

$$U_a \approx U_e,$$

erfolgt im Boost-Modus eine Spannungsverstärkung, die vom Verhältnis der Windungen von Sekundärspule zu den Windungen der Primärspule ist:

$$U_a \approx U_e \cdot (1 + \frac{N_2}{N_1}).$$

Eine bevorzugte Ausführungsform zeichnet sich dadurch aus, dass die Schaltelemente der ersten Schalteinrichtung eine Brückenschaltung bilden und/oder dass die Schaltelemente der zweiten Schalteinrichtung eine Brückenschaltung bilden. Brückenschaltungen ermöglichen eine einfache und transparente Realisierung der erfindungsgemässen Idee mit einer geringen Anzahl an gleichartigen Schaltelementen.

Eine bevorzugte Ausführungsform zeichnet sich dadurch aus, dass die erste Schalteinrichtung vier Schaltelemente umfasst, die zusammen mit der Primärspule eine Vollbrücke bilden, wobei die Primärspule den Brückenzweig bildet, und/oder dass die zweite Schalteinrichtung vier Schaltelemente umfasst, die zusammen mit der Sekundärspule eine Vollbrücke bilden, wobei die Sekundärspule den Brückenzweig bildet. Die Auskopplung und die Einkopplung des induktiven 'Bypasses' erfolgt dabei jeweils mittels einer Vollbrücke. Die Ansteuerung der Schaltelemente einer Vollbrücke ist besonders einfach. Eine erste Vollbrücke (erste Schalteinrichtung und Primärspule) ist zwischen den beiden Polen des Gleichspannungseingangs und die zweite Vollbrücke (zweite Schalteinrichtung und Sekundärspule) ist zwischen einem Eingangspol und dem gleichnamigen Ausgangspol des Gleichspannungsspannungswandlers geschaltet.

Eine Ausführungsform zeichnet sich dadurch aus, dass die Schaltelemente Halbleiterschaltelemente, insbesondere IGBTs und/oder MOSFETs, sind. Die Schaltelemente werden durch eine Steuereinrichtung bzw. Treiber angesteuert. Im Boost-Modus (Spannungsverstärkung) erfolgt eine intermittierende Ansteuerung der Schaltelemente, während im Normalmodus (keine Verstärkung) die Schaltelemente stationär sind, d.h. nicht geschaltet werden.

Eine Ausführungsform zeichnet sich dadurch aus, dass die erste Schalteinrichtung einen ersten Schaltzustand und einen zweiten Schaltzustand aufweist, in denen die Primärspule parallel zum Gleichspannungseingang geschaltet ist, wobei die Stromrichtung durch die Primärspule im ersten Schaltzustand zur Stromrichtung durch die Primärspule im zweiten Schaltzustand entgegengesetzt ist,
und dass die zweite Schalteinrichtung einen ersten Schaltzustand und einen zweiten Schaltzustand aufweist, in denen die Sekundärspule eine Umgehung der Unterbrechung in der zweiten Verbindungsleitung bildet, wobei die Stromrichtung durch die Sekundärspule im ersten Schaltzustand zur Stromrichtung durch die Sekundärspule im zweiten Schaltzustand entgegengesetzt ist.

An dieser Stelle sei erwähnt, dass zwischen den ersten Schaltzuständen und den zweiten Schaltzuständen jeweils kurze Übergangszustände (Totzeit) vorgesehen sein können. Diese Übergangszustände werden generiert, um ein gleichzeitiges Leiten zweier Schalter einer Halbbrücke und einen damit verbundenen unkontrollierbaren Strom, welcher Schäden an der Hardware bewirken könnte, zu vermeiden.

Eine Ausführungsform zeichnet sich dadurch aus, dass das Windungsverhältnis $N_1/N_2$ zwischen der Primärspule und der Sekundärspule grösser als 1 ist. Im Hinblick auf das oben angegebene Verstärkungsverhältnis kann dabei die Spannungsverstärkung 100% der Eingangsspannung nicht überschreiten. Im Elektrofahrzeugbereich (Kick-Down) werden Spannungsverstärkungen von 5% bis 20% der Eingangsspannung bevorzugt. Z.B. kann der Gleichspannungswandler bzw. - Verstärker derart dimensioniert sein, dass im Boost-Modus bei einer Batteriespannung von 400V (Eingangsspannung) beispielsweise 450V am Ausgang erreicht werden.

Eine bevorzugte Ausführungsform zeichnet sich dadurch aus, dass die erste Verbindungsleitung zwischen dem ersten Pol des Gleichspannungseingangs und dem gleichnamigen ersten Pol des Gleichspannungsausgangs frei von induktiven Bauelementen ist, und dass die zweite Verbindungsleitung zwischen dem zweiten Pol des Gleichspannungseingangs und dem gleichnamigen zweiten Pol des Gleichspannungsausgangs frei von induktiven Bauelementen ist. Dadurch treten im Normalmodus nur sehr geringe Verluste auf. In einer besonders bevorzugten Ausführung ist die erste Verbindungsleitung frei von jeglichen - aktiven und passiven - elektrischen Bauelementen und somit zwischen dem ersten Pol des Gleichspannungseingangs und dem gleichnamigen ersten Pol des Gleichspannungsausgang permanent 'durchverbunden'.

Das eingangs erwähnte Ziel wird auch mit einem Verfahren zum Betrieb eines erfindungsgemässen Gleichspannungswandlers erreicht, wobei der Gleichspannungswandler in einem ersten Betriebsmodus (Normalmodus) betrieben wird, in dem die Primärspule aufgrund des Schaltzustandes der ersten Schalteinrichtung von der ersten und/oder zweiten Verbindungsleitung getrennt ist, sodass die Primärspule von dem Gleichspannungseingang entkoppelt ist, und in dem aufgrund des Schaltzustandes der zweiten Schalteinrichtung unabhängig von der Sekundärspule eine galvanische Verbindung zwischen dem ersten Pol des Gleichspannungseingangs und dem gleichnamigen ersten Pol des Gleichspannungsausgangs hergestellt ist. Vorzugsweise entspricht hier die Ausgangsspannung im Wesentlichen der Eingangsspannung des Gleichspannungswandlers.

Ein weiteres Verfahren zum Betrieb eines erfindungsgemässen Gleichspannungswandlers zeichnet sich dadurch aus, dass der Gleichspannungswandler in einem zweiten Betriebsmodus (Boost-Modus) betrieben wird, in dem die erste Schalteinrichtung intermittierend zwischen einem ersten Schaltzustand und einem zweiten Schaltzustand geschaltet wird, in denen die Primärspule parallel zum Gleichspannungseingang geschaltet ist, wobei die Stromrichtung durch die Primärspule im ersten Schaltzustand zur Stromrichtung durch die Primärspule im zweiten Schaltzustand entgegengesetzt ist, und in dem die zweite Schalteinrichtung intermittierend zwischen einem ersten Schaltzustand und einem zweiten Schaltzustand geschaltet wird, in denen die Sekundärspule eine Umgehung der Unterbrechung in der zweiten Verbindungsleitung bildet, wobei die Stromrichtung durch die Sekundärspule im ersten Schaltzustand zur Stromrichtung durch die Sekundärspule im zweiten Schaltzustand entgegengesetzt ist. Im Boost-Modus erfolgt eine Spannungsverstärkung. Vorzugsweise wird der Boost-Modus zwischen zwei Normalmodus-Phasen für eine Zeitspanne von höchstens 1 min, besonders bevorzugt von höchstens 30s betätigt.

Eine Ausführungsform zeichnet sich dadurch aus, dass die erste Schalteinrichtung und die zweite Schalteinrichtung synchronisiert angesteuert werden. Dies erfolgt über eine gemeinsame Steuereinrichtung, die auch Treiber für die Schaltelemente umfassen kann.

Eine bevorzugte Ausführungsform zeichnet sich dadurch aus, dass die Schaltfrequenz zwischen den ersten und zweiten Schaltzuständen zumindest 30kHz , vorzugsweise höchstens 200kHz , beträgt.

Das eingangs erwähnte Ziel wird auch erreicht mit einem Energieversorgungsstrang für einen Elektromotor umfassend:

- eine Gleichspannungsquelle, insbesondere einen elektrischen Energiespeicher,

- einen mit dem Elektromotor zu verbindenden Umrichter zur Umwandlung der Gleichspannung in eine Wechselspannung,

wobei zwischen der Gleichspannungsquelle und dem Umrichter ein Gleichspannungswandler nach einer der obigen Ausführungsformen geschaltet ist. Die Ausgangsspannung der Gleichspannungsquelle kann somit im Boost-Modus des Gleichspannungswandlers erhöht werden, sodass am Umrichter eine höhere Spannung anliegt.

Dabei ist der Gleichspannungseingang des Gleichspannungswandlers an die Gleichspannungsquelle angeschlossen und der Gleichspannungsausgang des Gleichspannungswandlers mit dem (Gleichspannungs-)Eingang des Umrichters verbunden.

Wie bereits zuvor erwähnt ist die Primärspule des Transformators und die dazugehörige erste Schalteinrichtung (Vollbrücke) zwischen den beiden Polen des Gleichspannungseingangs geschaltet und die Sekundärspule und die dazugehörige zweite Schalteinrichtung (Vollbrücke) zwischen einem Pol des Gleichspannungseingangs und dem gleichnamigen Pol des Gleichspannungsausgangs verbunden. Der andere Pol des Gleichspannungseingangs ist mit dem gleichnamigen Pol des Gleichspannungsausgangs vorzugsweise ohne weitere serielle elektrische Bauelemente "durchverbunden".

Die Erfindung bezieht sich auch auf ein Elektrofahrzeug mit einem Elektromotor und einem solchen Energieversorgungsstrang zur elektrischen Energieversorgung des Elektromotors.

Die Erfindung bezieht sich auch auf andere Anwendungsgebiete und kann somit auch Werkzeugmaschinen (z.B. Bohrmaschinen), Baumaschinen, und dgl. betreffen, die durch eine elektrische Spannungsversorgung angetrieben werden. Ganz allgemein ist die Erfindung auf elektrische Antriebseinheiten aller Art anwendbar.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugzeichen mit unterschiedlichen Indices geben funktionsgleiche oder ähnliche Bauteile an.

Es zeigen dabei:

Fig. 1 einen erfindungsgemässen Gleichspannungswandler in einem stationären (dritten) Schaltzustand,

Fig. 2 den Gleichspannungswandler aus Fig. 1 in einem ersten Schaltzustand,

Fig. 3 den Gleichspannungswandler aus Fig. 1 in einem zweiten Schaltzustand, und

Fig. 4 schematisch ein Elektrofahrzeug,

Fig. 5 die Abhängigkeit von Leistung und Drehmoment von der Drehzahl des Motors, und

Fig. 6 einen DC/DC-Wandler gemäss Stand der Technik.

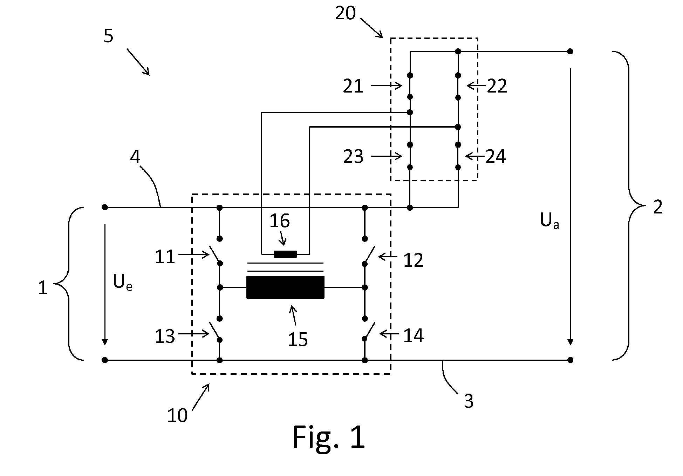

Fig. 1 zeigt einen Gleichspannungswandler 5, der in zumindest zwei Betriebsmodi betrieben werden kann. Er umfasst einen Gleichspannungseingang 1, an dem eine Eingangsspannung $U_e$ anliegt und einen Gleichspannungsausgang 2, an dem eine Ausgangsspannung $D_a$ zur Verfügung gestellt wird. Eine erste Verbindungleitung 3 verbindet einen ersten Pol des Gleichspannungseingangs 1 mit dem gleichnamigen ersten Pol des Gleichspannungsausgangs 2. Eine zweite Verbindungleitung 4 verbindet (über Schaltelemente 21, 22, 23, 24 der zweiten Schalteinrichtung 20) einen zweiten Pol des Gleichspannungseingangs 1 mit einem gleichnamigen zweiten Pol des Gleichspannungsausgangs 2.

Der Gleichspannungswandler umfasst weiters eine erste Schalteinrichtung 10 und eine zweite Schalteinrichtung 20. Eine Primärspule 15 und eine Sekundärspule 16, die induktiv miteinander gekoppelt sind, bilden einen Transformator.

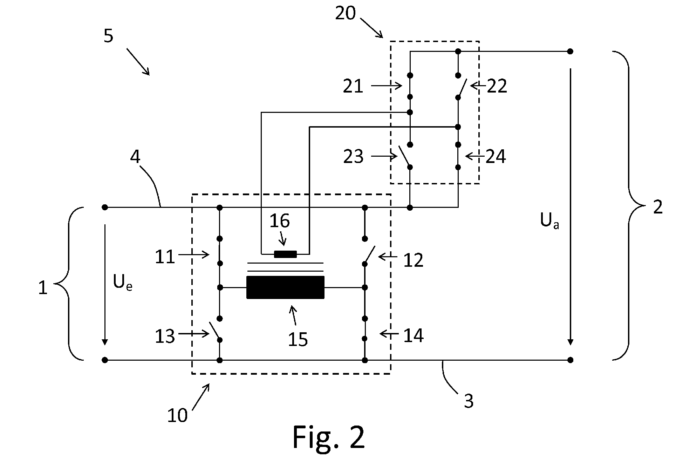

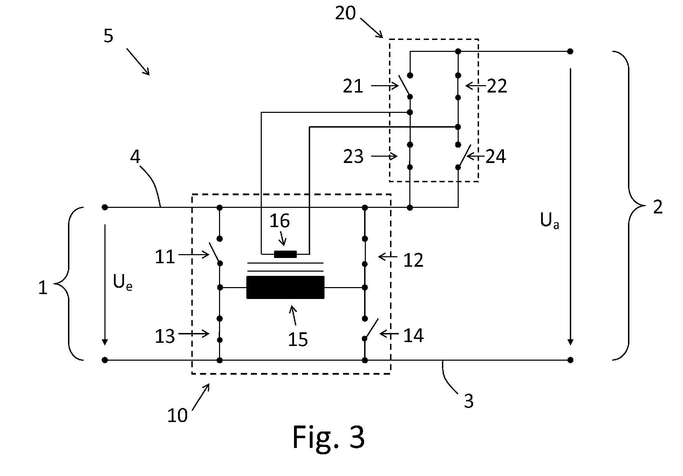

Wie aus den Fig. 1 bis 3 zu sehen ist die erste Schalteinrichtung 10 zwischen der ersten Verbindungsleitung 3 und der zweiten Verbindungsleitung 4 geschaltet und mit der Primärspule 15 verbunden. Die Primärspule 15 ist in zumindest einem Schaltzustand der ersten Schalteinrichtung 10 parallel zum Gleichspannungseingang 1 geschaltet. Diese im Folgenden als erster und zweiter Schaltzustand bezeichneten Schaltzustände sind in den Fig. 2 und 3 dargestellt. In zumindest einem weiteren Schaltzustand der ersten Schalteinrichtung 10 ist die Primärspule 15 von der ersten und/oder zweiten Verbindungsleitung 3; 4 getrennt. Dieser weitere Schaltzustand ist in Fig. 1 dargestellt und entspricht dem ersten Betriebsmodus (oder Normalmodus). Die Primär- und Sekundärspulen sind im Normalmodus nicht bestromt.

Die zweite Schalteinrichtung 20 ist in der zweiten Verbindungsleitung 4 geschaltet und mit der Sekundärspule 16 verbunden, wobei in zumindest einem Schaltzustand der zweiten Schalteinrichtung 20 die zweite Verbindungsleitung 4 unterbrochen und die Unterbrechung in der zweiten Verbindungsleitung 4 durch eine Umleitung über die Sekundärspule 16 umgangen ist. Diese im Folgenden als erster und zweiter Schaltzustand bezeichneten Schaltzustände sind in den Fig. 2 und 3 dargestellt. In zumindest einem weiteren Schaltzustand der zweiten Schalteinrichtung 20 ist - unabhängig von bzw. abseits der Sekundärspule 16 - eine galvanische Verbindung zwischen dem ersten Pol des Gleichspannungseingangs 1 und dem gleichnamigen ersten Pol des Gleichspannungsausgangs 2 hergestellt ist, d.h. die zweite Verbindungsleitung 4 ist nicht unterbrochen.

Der aus Primärspule 15 und Sekundärspule 16 gebildete Transformator stellt einen Bypass zur zweiten Verbindungsleitung 4 dar. Die Schalteinrichtungen 10, 20 koppeln diesen Bypass an den Gleichspannungseingang 1 bzw. an die zweite Verbindungsleitung 4 an. Die Spannungsverstärkung erfolgt somit im 'Huckepack'-Verfahren, d.h. die Schaltelemente der zweiten Schalteinrichtung 20, die auch im Normalmodus bestromt sind, müssen lediglich auf die maximale Differenzspannung $(U_a-U_e)$ ausgelegt sein, nicht jedoch für die gesamte Ausgangsspannung $U_a$.

Die Schaltelemente 11, 12, 13, 14 der ersten Schalteinrichtung 10 und die Schaltelemente 21, 22, 23, 24 der zweiten Schalteinrichtung 20 bilden jeweils eine Brückenschaltung.

In der dargestellten Ausführungsform umfasst die erste Schalteinrichtung 10 vier Schaltelemente 11, 12, 13, 14, die zusammen mit der Primärspule 15 eine Vollbrücke bilden. Dabei bildet die Primärspule 15 den Brückenzweig aus. Die zweite Schalteinrichtung 20 umfasst ebenfalls vier Schaltelemente 21, 22, 23, 24, die zusammen mit der Sekundärspule 16 eine Vollbrücke bilden, wobei die Sekundärspule 16 den Brückenzweig bildet.

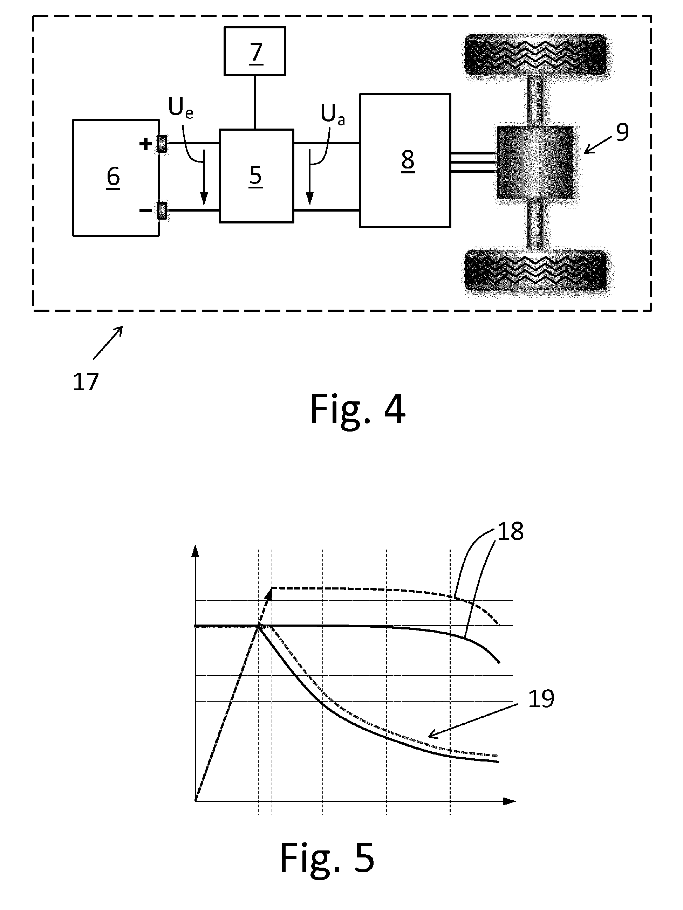

Die Schaltelemente 11, 12, 13, 14; 21, 22, 23, 24 sind vorzugsweise Halbleiterschaltelemente, insbesondere IGBTs und/oder MOSFETs, und können durch eine Steuereinrichtung 7 (Fig. 4), die auch Treiber umfassen kann, angesteuert werden. Die erste Schalteinrichtung 10 und die zweite Schalteinrichtung 20 werden synchronisiert angesteuert.

In der bevorzugten Ausführungsform weist die erste Schalteinrichtung 10 einen ersten Schaltzustand (Fig. 2) und einen zweiten Schaltzustand (Fig. 3) auf, in denen die Primärspule 15 jeweils parallel zum Gleichspannungseingang 1 geschaltet ist. Der Unterschied besteht jedoch darin, dass die Stromrichtung durch die Primärspule 15 im ersten Schaltzustand zur Stromrichtung durch die Primärspule 15 im zweiten Schaltzustand entgegengesetzt ist. Die zweite Schalteinrichtung 20 weist ebenso einen ersten Schaltzustand (Fig. 2) und einen zweiten Schaltzustand (Fig. 3) auf, in denen die Sekundärspule 16 jeweils eine Umgehung der Unterbrechung in der zweiten Verbindungsleitung 4 bildet. Auch hier ist die Stromrichtung durch die Sekundärspule 16 im ersten Schaltzustand zur Stromrichtung durch die Sekundärspule 16 im zweiten Schaltzustand entgegengesetzt.

Das Windungsverhältnis zwischen der Primärspule 15 und der Sekundärspule 16 ist im dargestellten Ausführungsbeispiel grösser als 1.

Bevorzugt ist, wenn wie in der dargestellten Ausführungsform, die erste Verbindungsleitung 3 zwischen dem ersten Pol des Gleichspannungseingangs 1 und dem gleichnamigen ersten Pol des Gleichspannungsausgangs 2 frei von induktiven Bauelementen, vorzugsweise frei von jeglichen elektrischen Bauelementen ist. Dasselbe wird für die zweite Verbindungsleitung 4 bevorzugt.

Der Gleichspannungswandler 5 kann nun in zumindest zwei Betriebsmodi betrieben werden:

Erster Betriebsmodus (oder Normalbetrieb): Die Primärspule 15 ist aufgrund des Schaltzustandes der ersten Schalteinrichtung 10 von der ersten und/oder zweiten Verbindungsleitung 3, 4 getrennt (Fig. 1), sodass die Primärspule 15 von dem Gleichspannungseingang 1 entkoppelt und somit nicht bestromt ist. Gleichzeitig ist aufgrund des Schaltzustandes der zweiten Schalteinrichtung 20 - unabhängig von bzw. abseits der Sekundärspule 16 - eine galvanische Verbindung zwischen dem ersten Pol des Gleichspannungseingangs 1 und dem gleichnamigen ersten Pol des Gleichspannungsausgangs 2 hergestellt (Fig. 1).

Zweiter Betriebsmodus (oder Boost-Modus): Die erste Schalteinrichtung 10 wird intermittierend zwischen einem ersten Schaltzustand (Fig. 2) und einem zweiten Schaltzustand (Fig. 3) geschaltet, in denen die Primärspule 15 jeweils parallel zum Gleichspannungseingang 1 geschaltet ist. Zwischen dem ersten und zweiten Schaltzustand, ändert sich die Stromrichtung durch die Primärspule 15. Gleichzeitig wird die zweite Schalteinrichtung 20 intermittierend zwischen einem ersten Schaltzustand (Fig. 2) und einem zweiten Schaltzustand (Fig. 3) geschaltet, in denen die Sekundärspule 16 jeweils eine Umgehung der Unterbrechung in der zweiten Verbindungsleitung 4 bildet. Zwischen diesen Schaltzuständen ändert sich die Stromrichtung durch die Sekundärspule 16.

Während im Normalmodus die Ausgangsspannung $U_a$ im Wesentlichen gleich der Eingangsspannung $U_e$ ist:

$$U_a \approx U_e,$$

erfolgt im Boost-Modus eine Spannungsverstärkung, die im Wesentlichen vom Verhältnis der Windungen $N_2$ von Sekundärspule 16 zu den Windungen $N_1$ der Primärspule 15 ist:

$$U_a \approx U_e \cdot (1 + \frac{N_2}{N_1}).$$

Mit dem Boost-Modus kann somit eine (kurzzeitige) Spannungs- bzw. Leistungsverstärkung bewirkt werden.

Wie aus den Fig. 2 und 3 zu sehen werden die Schaltzustände dadurch realisiert, dass innerhalb der Brückenschaltung die jeweils einander gegenüberliegenden Schaltelemente 11, 14 (z.B. EIN) und 12, 13 (z.B. AUS) bzw. 21, 24 (z.B. EIN) und 22, 23 (z.B. AUS) denselben Schaltzustand aufweisen, während nebeneinander liegende Schaltelemente (z.B. 11, 13 und 12, 14) jeweils unterschiedlichen Schaltzustand aufweisen.

Bevorzugt beträgt die Schaltfrequenz zwischen den ersten und zweiten Schaltzuständen der Schalteinrichtungen 10, 20 zumindest 30kHz , vorzugsweise höchstens 200kHz , beträgt.

Fig. 4 zeigt einen Energieversorgungsstrang für einen Elektromotor 9 umfassend: eine Gleichspannungsquelle 6, insbesondere einen elektrischen Energiespeicher (z.B. Batterie), und einen mit dem Elektromotor 9 zu verbindenden Umrichter 8 zur Umwandlung der Gleichspannung in eine Wechselspannung. Zwischen der Gleichspannungsquelle 6 und dem Umrichter 8 ist nun der erfindungsgemässe Gleichspannungswandler 5 nach geschaltet ist.

Der Gleichspannungswandler 5 ist derart zwischen der Gleichspannungsquelle 6 und dem Umrichter 8 geschaltet, dass der Gleichspannungseingang 1 des Gleichspannungswandlers 5 mit der Gleichspannungsquelle 6 verbunden ist und der Gleichspannungsausgang 2 des Gleichspannungswandlers 5 mit dem Umrichter 8 verbunden ist.

In Fig. 4 ist der Energieversorgungsstrang in einem (schematisch dargestellten) Elektrofahrzeug 17 integriert.

Fig. 5 zeigt einen wesentlichen Vorteil der Erfindung. Dabei ist der Verlauf der Leistung 18 und des Drehmoments 19 in Abhängigkeit von der Drehzahl des Motors aufgetragen. Die strichlierten Kurven beziehen sich dabei auf das Verhalten des Motors unter Verwendung des erfindungsgemässen Gleichspannungswandlers. Die durchgezogenen Kurven beziehen sich auf das Verhalten desselben Motors ohne Verwendung des erfindungsgemässen Gleichspannungswandlers und somit direkter Anbindung des Umrichters 8 an die Gleichspannungsquelle 6. Aus Fig. 5 ist deutlich die höhere Leistung (Vergleich der beiden Leistungskennlinien 18) und ein über einen grösseren Frequenzbereich zur Verfügung stehendes maximales Drehmoment (Vergleich der beiden Drehmomentkennlinien 19) bei Verwendung der vorliegenden Erfindung ersichtlich.

Die Erfindung ist nicht auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

### Bezugszeichenliste

| | | | |
|---|---|---|---|
| 1 | Gleichspannungseingang | 23 | Schaltelement |
| 2 | Gleichspannungsausgang | 24 | Schaltelement |
| 3 | Erste Verbindungsleitung | $U_e$ | Eingangsspannung |
| 4 | Zweite Verbindungsleitung | $D_a$ | Ausgangsspannung |
| 5 | Gleichspannungswandler | | |
| 6 | Gleichspannungsquelle | | |
| 7 | Steuereinrichtung | | |
| 8 | Umrichter | | |
| 9 | Elektromotor | | |
| 10 | Erste Schalteinrichtung | | |
| 11 | Schaltelement | | |
| 12 | Schaltelement | | |

(fortgesetzt)

| 13 | Schaltelement |
|----|---------------|
| 14 | Schaltelement |
| 15 | Primärspule |
| 16 | Sekundärspule |
| 17 | Elektrofahrzeug |
| 18 | Leistung |
| 19 | Drehmoment |
| 20 | Zweite Schalteinrichtung |
| 21 | Schaltelement |
| 22 | Schaltelement |

**Patentansprüche**

1. Gleichspannungswandler (5) mit zumindest zwei Betriebsmodi, umfassend:

- einen Gleichspannungseingang (1),
- einen Gleichspannungsausgang (2),
- eine erste Verbindungleitung (3), die einen ersten Pol des Gleichspannungseingangs (1) mit dem gleichnamigen ersten Pol des Gleichspannungsausgangs (2) verbindet,
- eine zweite Verbindungleitung (4), die einen zweiten Pol des Gleichspannungseingangs (1) mit einem gleichnamigen zweiten Pol des Gleichspannungsausgangs (2) verbindet,
- eine erste Schalteinrichtung (10),
- eine zweite Schalteinrichtung (20),
- eine Primärspule (15) und eine Sekundärspule (16), die induktiv miteinander gekoppelt sind,

**dadurch gekennzeichnet, dass** die erste Schalteinrichtung (10) zwischen der ersten Verbindungsleitung (3) und der zweiten Verbindungsleitung (4) geschaltet und mit der Primärspule (15) verbunden ist, wobei die Primärspule (15) in zumindest einem Schaltzustand der ersten Schalteinrichtung (10) parallel zum Gleichspannungseingang (1) geschaltet ist und in zumindest einem weiteren Schaltzustand der ersten Schalteinrichtung (10) von der ersten und/oder zweiten Verbindungsleitung (3; 4) getrennt ist,

und dass die zweite Schalteinrichtung (20) in der zweiten Verbindungsleitung (4) geschaltet und mit der Sekundärspule (16) verbunden ist, wobei in zumindest einem Schaltzustand der zweiten Schalteinrichtung (20) die zweite Verbindungsleitung (4) unterbrochen und die Unterbrechung in der zweiten Verbindungsleitung (4) durch eine Umleitung über die Sekundärspule (16) umgangen ist, und wobei in zumindest einem weiteren Schaltzustand der zweiten Schalteinrichtung (20) unabhängig von der Sekundärspule (16) eine galvanische Verbindung zwischen dem ersten Pol des Gleichspannungseingangs (1) und dem gleichnamigen ersten Pol des Gleichspannungsausgangs (2) hergestellt ist.

2. Gleichspannungswandler nach Anspruch 1, **dadurch gekennzeichnet, dass** Schaltelemente (11, 12, 13, 14) der ersten Schalteinrichtung (10) eine Brückenschaltung bilden und/oder dass Schaltelemente (21, 22, 23, 24) der zweiten Schalteinrichtung (20) eine Brückenschaltung bilden.

3. Gleichspannungswandler nach Anspruch 1 oder 2, **dadurch gekennzeichnet, dass** die erste Schalteinrichtung (10) vier Schaltelemente (11, 12, 13, 14) umfasst, die zusammen mit der Primärspule (15) eine Vollbrücke bilden, wobei die Primärspule (15) den Brückenzweig bildet, und/oder dass die zweite Schalteinrichtung (20) vier Schaltelemente (21, 22, 23, 24) umfasst, die zusammen mit der Sekundärspule (16) eine Vollbrücke bilden, wobei die Sekundärspule (16) den Brückenzweig bildet.

4. Gleichspannungswandler nach einem der vorhergehenden Ansprüche, **dadurch gekennzeichnet, dass** das die Schaltelemente (11, 12, 13, 14; 21, 22, 23, 24) Halbleiterschaltelemente, insbesondere IGBTs und/oder MOSFETs, sind.

5. Gleichspannungswandler nach einem der vorhergehenden Ansprüche, **dadurch gekennzeichnet, dass** die erste Schalteinrichtung (10) einen ersten Schaltzustand und einen zweiten Schaltzustand aufweist, in denen die Primärspule (15) parallel zum Gleichspannungseingang (1) geschaltet ist, wobei die Stromrichtung durch die Primärspule (15) im ersten Schaltzustand zur Stromrichtung durch die Primärspule (15) im zweiten Schaltzustand entgegengesetzt ist,

und dass die zweite Schalteinrichtung (20) einen ersten Schaltzustand und einen zweiten Schaltzustand aufweist, in denen die Sekundärspule (16) eine Umgehung der Unterbrechung in der zweiten Verbindungsleitung (4) bildet, wobei die Stromrichtung durch die Sekundärspule (16) im ersten Schaltzustand zur Stromrichtung durch die Sekundärspule (16) im zweiten Schaltzustand entgegengesetzt ist.

6. Gleichspannungswandler nach einem der vorhergehenden Ansprüche, **dadurch gekennzeichnet, dass** das Windungsverhältnis zwischen der Primärspule (15) und der Sekundärspule (16) grösser als 1 ist.

7. Gleichspannungswandler nach einem der vorhergehenden Ansprüche, **dadurch gekennzeichnet, dass** das die erste Verbindungsleitung (3) zwischen dem ersten Pol des Gleichspannungseingangs (1) und dem gleichnamigen ersten Pol des Gleichspannungsausgangs (2) frei von induktiven Bauelementen ist.

8. Gleichspannungswandler nach einem der vorhergehenden Ansprüche, **dadurch gekennzeichnet, dass** die zweite Verbindungsleitung (4) zwischen dem zweiten Pol des Gleichspannungseingangs (1) und dem gleichnamigen zweiten Pol des Gleichspannungsausgangs (2) frei von induktiven Bauelementen, vorzugsweise frei von jeglichen aktiven und passiven elektrischen Bauelementen, ist.

9. Verfahren zum Betrieb eines Gleichspannungswandlers nach einem der vorhergehenden Ansprüche, **dadurch gekennzeichnet, dass** der Gleichspannungswandler (5) in einem ersten Betriebsmodus betrieben wird, in dem die Primärspule (15) aufgrund des Schaltzustandes der ersten Schalteinrichtung (10) von der ersten und/oder zweiten Verbindungsleitung (3, 4) getrennt ist, sodass die Primärspule (15) von dem Gleichspannungseingang (1) entkoppelt ist, und in dem aufgrund des Schaltzustandes der zweiten Schalteinrichtung (20) unabhängig von der Sekundärspule (16) eine galvanische Verbindung zwischen dem ersten Pol des Gleichspannungseingangs (1) und dem gleichnamigen ersten Pol des Gleichspannungsausgangs (2) hergestellt ist.

10. Verfahren, insbesondere nach Anspruch 9, zum Betrieb eines Gleichspannungswandlers nach einem der Ansprüche 1 bis 8, **dadurch gekennzeichnet, dass** der Gleichspannungswandler (5) in einem zweiten Betriebsmodus betrieben wird, in dem die erste Schalteinrichtung (10) intermittierend zwischen einem ersten Schaltzustand und einem zweiten Schaltzustand geschaltet wird, in denen die Primärspule (15) parallel zum Gleichspannungseingang (1) geschaltet ist, wobei die Stromrichtung durch die Primärspule (15) im ersten Schaltzustand zur Stromrichtung durch die Primärspule (15) im zweiten Schaltzustand entgegengesetzt ist, und in dem die zweite Schalteinrichtung (20) intermittierend zwischen einem ersten Schaltzustand und einem zweiten Schaltzustand geschaltet wird, in denen die Sekundärspule (16) eine Umgehung der Unterbrechung in der zweiten Verbindungsleitung (4) bildet, wobei die Stromrichtung durch die Sekundärspule (16) im ersten Schaltzustand zur Stromrichtung durch die Sekundärspule (16) im zweiten Schaltzustand entgegengesetzt ist.

11. Verfahren nach Anspruch 10, **dadurch gekennzeichnet, dass** die erste Schalteinrichtung (10) und die zweite Schalteinrichtung (20) synchronisiert angesteuert werden.

12. Verfahren nach Anspruch 10 oder 11, **dadurch gekennzeichnet, dass** die Schaltfrequenz zwischen den ersten und zweiten Schaltzuständen der Schalteinrichtungen (10, 20) zumindest 30kHz, vorzugsweise höchstens 200kHz, beträgt.

13. Energieversorgungsstrang für einen Elektromotor (9) umfassend:

   - eine Gleichspannungsquelle (6), insbesondere einen elektrischen Energiespeicher,
   - einen mit dem Elektromotor (9) zu verbindenden Umrichter (8) zur Umwandlung der Gleichspannung in eine Wechselspannung, **dadurch gekennzeichnet, dass** zwischen der Gleichspannungsquelle (6) und dem Umrichter (8) ein Gleichspannungswandler (5) nach einem der Ansprüche 1 bis 8 geschaltet ist.

14. Energieversorgungsstrang nach Anspruch 13, **dadurch gekennzeichnet, dass** der Gleichspannungseingang (1) des Gleichspannungswandlers (5) an die Gleichspannungsquelle (6) angeschlossen und der Gleichspannungsausgang (2) des Gleichspannungswandlers (5) mit dem (Gleichspannungs-)Eingang des Umrichters (8) verbunden ist, wobei vorzugsweise die Primärspule (15) des Transformators und die dazugehörige erste Schalteinrichtung (10) (Vollbrücke) zwischen den beiden Polen des Gleichspannungseingangs (1) geschaltet und die Sekundärspule (16) und die dazugehörige zweite Schalteinrichtung (20) (Vollbrücke) zwischen einem Pol des Gleichspannungseingangs (1) und dem gleichnamigen Pol des Gleichspannungsausgangs (2) verbunden ist, und optional der andere Pol des Gleichspannungseingangs (1) mit dem gleichnamigen Pol des Gleichspannungsausgangs (2) vorzugsweise ohne weitere serielle elektrische Bauelemente "durchverbunden" ist.

15. Elektrofahrzeug (17) mit einem Elektromotor (9) und einem Energieversorgungsstrang nach einem der Ansprüche Anspruch 13 oder 14 zur elektrischen Energieversorgung des Elektromotors (9).

Fig. 1

Fig. 2

Fig. 3

Fig. 4

Fig. 5

PRIOR ART

Fig. 6

**Europäisches Patentamt**
**European Patent Office**
**Office européen des brevets**

# EUROPÄISCHER RECHERCHENBERICHT

**Nummer der Anmeldung**

EP 14 18 0724

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 739 466 A (GLENNON TIMOTHY F [US] ET AL) 19. April 1988 (1988-04-19) | 1-12 | INV. H02M3/158 H02M3/335 |
| Y | * Abbildungen 1,2,3,4 * <br> * Spalte 3, Zeilen 55-60 * <br> * Spalte 4, Zeile 9 - Spalte 7, Zeile 4 * <br> ----- | 13-15 | |
| Y | US 2014/167663 A1 (IDE HIROHITO [JP] ET AL) 19. Juni 2014 (2014-06-19) <br> * Abbildung 1 * <br> * Absatz [0034] * <br> ----- | 13-15 | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| München | 13. April 2015 | Zettler, Karl-Rudolf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

                                                                            
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 0724

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2015

| Im Recherchenbericht angeführtes Patentdokument | Datum der Veröffentlichung | Mitglied(er) der Patentfamilie | Datum der Veröffentlichung |
|---|---|---|---|
| US 4739466      A | 19-04-1988 | EP    0297123 A1<br>JP  H01501834 A<br>US    4739466 A<br>WO    8805224 A1 | 04-01-1989<br>22-06-1989<br>19-04-1988<br>14-07-1988 |
| US 2014167663   A1 | 19-06-2014 | JP  2014121215 A<br>US  2014167663 A1 | 30-06-2014<br>19-06-2014 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7557546 B2
- US 5060130 A
- US 8461813 B2
- US 6191957 B1
- US 6587356 B2